# EUROPEAN PATENT SPECIFICATION

(11) **EP 4 030 002 B1**
(45) Date of publication and mention of the grant of the patent: **12.03.2025**
(21) Application number: 20906951.7
(22) Date of filing: 02.12.2020
(51) Int. Cl.: E02F 9/20, E02F 9/26, G01G 19/08, E02F 3/43

(54) **WORK MACHINE, WEIGHING METHOD AND SYSTEM INCLUDING A WORK MACHINE**
ARBEITSMASCHINE, WÄGEVERFAHREN UND SYSTEM MIT EINER ARBEITSMASCHINE
MACHINE DE TRAVAIL, MÉTHODE DE PESAGE ET SYSTÈME INCLUANT UNE MACHINE DE TRAVAIL

(30) Priority: 27.12.2019 JP 2019238196
(43) Date of publication of application: 20.07.2022
(73) Proprietor: Komatsu Ltd., Minato-ku Tokyo 107-8414 (JP)
(72) Inventor: YAMAWAKI, Shota, Tokyo 107-8414 (JP)
(74) Representative: Grünecker Patent- und Rechtsanwälte PartG mbB
(86) International application number: PCT/JP2020/044803
(87) International publication number: WO 2021/131547

(56) References cited:
- EP-A1- 4 030 001
- JP-A- 2001 099 701
- JP-A- 2006 336 390
- JP-A- H0 285 725
- US-A- 5 226 496

## Description

### TECHNICAL FIELD

The present disclosure relates to a work machine, a weighing method, and a system including the work machine.

### BACKGROUND ART

PTL 1 (Japanese Patent Laying-Open No. 2001-99701) proposes a technique for measuring the weight of a load mounted on a load mount unit in a wheel loader.

PTL 2 (Japanese Patent Laying-Open No. 2006-336390) describes a load detector for detecting the load of an object held in a bucket of a work machine and aims to improve accuracy of detecting. The load is measured via the oil pressure in a boom hydraulic cylinder. A correction mechanism for the weight fluctuation/the fluctuation of the oil pressure in view of movement, such as movement of the boom and engine rotation, is foreseen.

### CITATION LIST

### PATENT LITERATURE

PTL 1: Japanese Patent Laying-Open No. 2001-99701
PTL2: Japanese Patent Laying-Open No. 2006-336390

### SUMMARY OF INVENTION

### TECHNICAL PROBLEM

According to the disclosure in the above-mentioned reference, the hydraulic pressure in a hydraulic cylinder for raising a boom is sampled for a prescribed sampling time period, this sampling is repeated multiple times, a sampling weight on a load mount unit is obtained based on a boom angle and an average value of the sampled hydraulic pressures in a sampling time period, and then, the sampling weights obtained in multiple times of sampling are averaged to calculate a loading weight.

According to the method disclosed in the above-mentioned reference, the sampling weight is different for each of the multiple times of sampling. Thus, in order to eliminate such a difference for accurately calculating the loading weight, averaging needs to be conducted for an extended period of time.

The present disclosure proposes a work machine, a weighing method, and a system including the work machine, by which a load in a bucket can be accurately weighed in a short time period.

### SOLUTION TO PROBLEM

This is achieved by the features of the independent claims.

### ADVANTAGEOUS EFFECTS OF INVENTION

According to the present disclosure, the load in the bucket can be accurately weighed in a short time period.

### BRIEF DESCRIPTION OF DRAWINGS

Fig. 1 is a side view of a wheel loader as an example of a work machine according to an embodiment.
Fig. 2 is a schematic block diagram showing a configuration of an entire system including the wheel loader according to the embodiment.
Fig. 3 is a diagram showing functional blocks in a first processor.
Fig. 4 is a graph showing an example of a relation between a boom angle and boom pressure for each instantaneous load weight.
Fig. 5 is a graph showing a relation between the boom pressure and the instantaneous load weight at a certain boom angle.
Fig. 6 is a schematic diagram showing an example of an excavation operation of the wheel loader.
Fig. 7 is a flowchart illustrating a weighing method of weighing a load in a bucket according to an embodiment.
Fig. 8 is a graph showing fluctuations in boom pressure with respect to time.
Fig. 9 is a schematic diagram of a system including the wheel loader.

### DESCRIPTION OF EMBODIMENTS

Embodiments will be hereinafter described with reference to the accompanying drawings. In the following description, the same components are denoted by the same reference characters. Their names and functions are also the same. Accordingly, the detailed description thereof will not be repeated.

### <Overall Configuration>

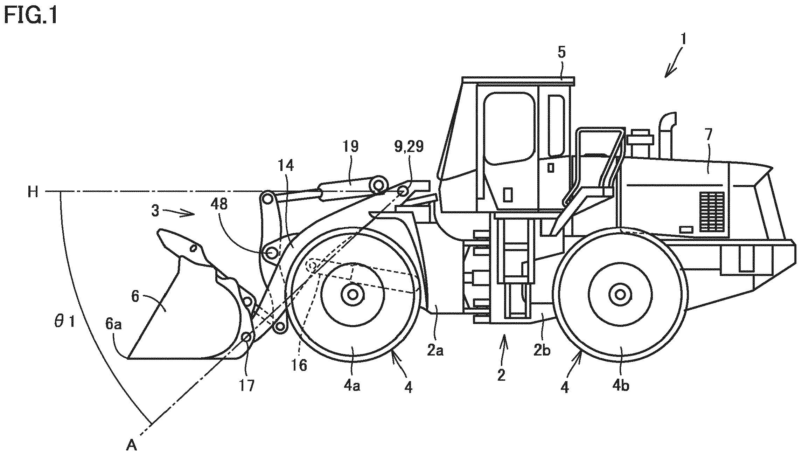

In an embodiment, a wheel loader 1 will be hereinafter described as an example of a work machine. Fig. 1 is a side view of wheel loader 1 as an example of the work machine according to the embodiment.

As shown in Fig. 1, wheel loader 1 includes a vehicular body frame 2, a work implement 3, a traveling unit 4, and a cab 5. Vehicular body frame 2, cab 5 and the like constitute a vehicular body (a work machine main body) of wheel loader 1. Work implement 3 and traveling unit 4 are attached to the vehicular body of wheel loader 1.

Traveling unit 4 causes the vehicular body of wheel loader 1 to travel and includes running wheels 4a and 4b. Wheel loader 1 is a wheeled vehicle including running wheels 4a and 4b as rotating bodies for traveling on both sides of the vehicular body in a left-right direction. Wheel loader 1 is movable as running wheels 4a and 4b are rotationally driven, and also, can perform a desired work using work implement 3.

In the present specification, the direction in which wheel loader 1 travels straightforward is referred to as a front-rear direction of wheel loader 1. In the front-rear direction of wheel loader 1, the side where work implement 3 is located with respect to vehicular body frame 2 is referred to as a frontward direction, and the side opposite to the frontward direction is referred to as a rearward direction. The left-right direction of wheel loader 1 is orthogonal to the front-rear direction in a plan view of wheel loader 1 situated on a flat ground. The right side and the left side in the left-right direction in facing forward are defined as a right direction and a left direction, respectively. A top-bottom direction of wheel loader 1 is orthogonal to a plane defined by the front-rear direction and the left-right direction. In the top-bottom direction, the ground side is defined as a lower side and the sky side is defined as an upper side.

Vehicular body frame 2 includes a front frame 2a and a rear frame 2b. Front frame 2a and rear frame 2b constitute vehicular body frame 2 having an articulated structure.

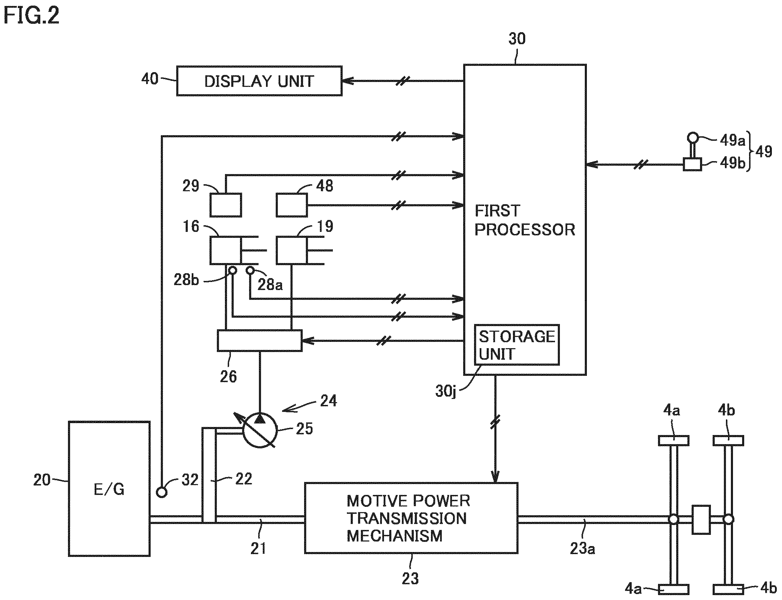

Work implement 3 and a pair of left and right running wheels (front wheels) 4a are attached to front frame 2a. Work implement 3 is disposed on the front side of the vehicular body and is supported by the vehicular body of wheel loader 1. Work implement 3 is driven by hydraulic oil from a work implement pump 25 (see Fig. 2). Work implement pump 25 is a hydraulic pump that is driven by an engine 20 to discharge hydraulic oil for operating work implement 3. Work implement 3 includes a boom 14 and a bucket 6 that serves as a work tool. Bucket 6 is disposed at the distal end of work implement 3.

A proximal end portion of boom 14 is attached by a boom pin 9 to front frame 2a so as to be rotatable. By a bucket pin 17 located at a distal end of boom 14, bucket 6 is attached to boom 14 so as to be rotatable.

Front frame 2a and boom 14 are coupled to each other by a pair of boom cylinders 16. Each boom cylinder 16 is a hydraulic cylinder. Each boom cylinder 16 has a proximal end attached to front frame 2a and a distal end attached to boom 14. As boom cylinder 16 extends and contracts by hydraulic oil from work implement pump 25 (see Fig. 2), boom 14 is raised and lowered. Boom cylinder 16 rotationally drives boom 14 to be raised and lowered about boom pin 9. As boom 14 is raised and lowered, bucket 6 attached to the distal end of boom 14 is also raised and lowered.

Work implement 3 further includes a bucket cylinder 19. Bucket cylinder 19 is a hydraulic cylinder and serves as a work tool cylinder that drives bucket 6 as a work tool. When bucket cylinder 19 extends and contracts by hydraulic oil from work implement pump 25 (see Fig. 2), bucket 6 pivots up and down. Bucket cylinder 19 drives bucket 6 to rotate about bucket pin 17.

Cab 5 and a pair of left and right running wheels (rear wheels) 4b are attached to rear frame 2b. Cab 5 is disposed behind boom 14. Cab 5 is placed on vehicular body frame 2. A seat on which an operator sits, an operation device (described later), and the like are disposed inside cab 5.

Fig. 2 is a schematic block diagram showing a configuration of the entire system including wheel loader 1 according to an embodiment.

Wheel loader 1 includes engine 20, a motive power extraction unit 22, a motive power transmission mechanism 23, a cylinder driving unit 24, a first angle detector 29, a second angle detector 48, and a first processor 30 (a controller).

Engine 20 is a diesel engine, for example. Engine 20 is accommodated in the accommodation space covered by an engine hood 7 (Fig. 1). An output from engine 20 is controlled by adjusting the amount of fuel to be injected into a cylinder of engine 20. Engine 20 is provided with a rotation sensor 32. Rotation sensor 32 detects the rotation speed of the rotation shaft inside engine 20 and outputs a detection signal indicating the rotation speed to first processor 30.

Motive power extraction unit 22 is a device that distributes the output from engine 20 to motive power transmission mechanism 23 and cylinder driving unit 24. Motive power transmission mechanism 23 is a mechanism that transmits the driving force from engine 20 to front wheels 4a and rear wheels 4b, and serves as a transmission, for example. In wheel loader 1, both front wheels 4a attached to front frame 2a and rear wheels 4b attached to rear frame 2b constitute driving wheels that receive driving force to cause wheel loader 1 to travel. Motive power transmission mechanism 23 changes the speed of rotation of an input shaft 21 and outputs the resultant rotation to an output shaft 23a.

Cylinder driving unit 24 includes work implement pump 25 and a control valve 26. The output from engine 20 is transmitted to work implement pump 25 through motive power extraction unit 22. The hydraulic oil discharged from work implement pump 25 is supplied to boom cylinder 16 and bucket cylinder 19 through control valve 26.

First hydraulic pressure detectors 28a and 28b for detecting hydraulic pressure (cylinder pressure) in an oil chamber of boom cylinder 16 are attached to boom cylinder 16. Wheel loader 1 includes first hydraulic pressure detectors 28a and 28b. First hydraulic pressure detectors 28a and 28b correspond to the cylinder pressure sensing units of the embodiment that sense the cylinder pressure in boom cylinder 16. First hydraulic pressure detectors 28a and 28b include a pressure sensor 28a for detecting head pressure and a pressure sensor 28b for detecting bottom pressure, for example.

Pressure sensor 28a is attached to the head side of boom cylinder 16 (the side from which a piston rod of boom cylinder 16 protrudes). Pressure sensor 28a can detect the pressure (head pressure) of the hydraulic oil in the cylinder head-side oil chamber of boom cylinder 16. Pressure sensor 28a outputs a detection signal showing the head pressure in boom cylinder 16 to first processor 30.

Pressure sensor 28b is attached to the bottom side of boom cylinder 16 (the side from which the piston rod of boom cylinder 16 does not protrude). Pressure sensor 28b can detect the pressure (bottom pressure) of the hydraulic oil in the cylinder bottom-side oil chamber of boom cylinder 16. Pressure sensor 28b outputs a detection signal showing the bottom pressure in boom cylinder 16 to first processor 30.

First angle detector 29 is, for example, a potentiometer attached to boom pin 9. First angle detector 29 detects a boom angle showing a lift angle of boom 14. First angle detector 29 outputs a detection signal showing the boom angle to first processor 30.

Specifically, as shown in Fig. 1, a boom reference line A is a straight line passing through the center of boom pin 9 and the center of bucket pin 17. A boom angle θ1 is formed by a horizontal line H extending forward from the center of boom pin 9 and boom reference line A. When boom reference line A horizontally extends, boom angle θ1 = 0°. When boom reference line A extends above horizontal line H, boom angle θ1 is positive. When boom reference line A extends below horizontal line H, boom angle θ1 is negative.

First angle detector 29 may be a stroke sensor disposed in boom cylinder 16. First angle detector 29 corresponds to a boom angle sensing unit of the embodiment that senses boom angle θ1 indicating an angle of boom 14 with respect to the vehicular body of wheel loader 1.

Second angle detector 48 is a potentiometer, for example. Second angle detector 48 detects a bucket angle indicating an angle of bucket 6 with respect to boom 14. Second angle detector 48 outputs a detection signal indicating the bucket angle to first processor 30. Second angle detector 48 may be a proximity switch. Alternatively, second angle detector 48 may be a stroke sensor disposed on bucket cylinder 19.

As shown in Fig. 2, wheel loader 1 includes an operation device 49 inside cab 5. Operation device 49 includes: an operation member 49a operated by an operator; and a detection sensor 49b that detects the position of operation member 49a and outputs the detection result to first processor 30. Operation device 49 is operated by the operator to give instructions to: switch the movement of the vehicle between forward movement and rearward movement; set the target rotational speed of engine 20; control the deceleration force of wheel loader 1; operate boom 14 to be raised and lowered; control a speed change from input shaft 21 to output shaft 23a in motive power transmission mechanism 23; cause bucket 6 to perform a tilting operation and a dumping operation; angle (articulate) front frame 2a relative to rear frame 2b; and the like.

First processor 30 is configured of a microcomputer including a storage device such as a random access memory (RAM) and a read only memory (ROM), and a computing device such as a central processing unit (CPU). First processor 30 may be implemented as a part of the function of the controller of wheel loader 1 that controls the operations of engine 20, work implement 3 (boom cylinder 16, bucket cylinder 19, and the like), motive power transmission mechanism 23, a display unit 40, and the like.

First processor 30 receives inputs including mainly: a signal of boom angle θ1 detected by first angle detector 29; a signal of the bucket angle detected by second angle detector 48; a signal of the head pressure of boom cylinder 16 detected by pressure sensor 28a; and a signal of the bottom pressure of boom cylinder 16 detected by pressure sensor 28b.

First processor 30 includes a storage unit 30j. Storage unit 30j stores a program for controlling various operations of wheel loader 1. First processor 30 performs various processes for controlling the operation of wheel loader 1 based on the program stored in storage unit 30j. Storage unit 30j is a non-volatile memory and provided as an area in which necessary data is stored.

Wheel loader 1 includes display unit 40. Display unit 40 is a monitor disposed in cab 5 and viewed by the operator. Display unit 40 shows information. Display unit 40 shows, for example, information related to the weight of the load in bucket 6 that is calculated by first processor 30.

### <Functional Blocks in First Processor 30>

First processor 30 shown in Fig. 2 has a function of calculating a boom pressure, i.e., a pressure difference between the head pressure detected by pressure sensor 28a and the bottom pressure detected by pressure sensor 28b. First processor 30 has a function of calculating an instantaneous load weight in bucket 6 based on the boom pressure and boom angle θ1. Further, first processor 30 has a function of calculating the weight of the load in bucket 6 by averaging the instantaneous load weights. The following describes the functional blocks in first processor 30 having the above-mentioned functions.

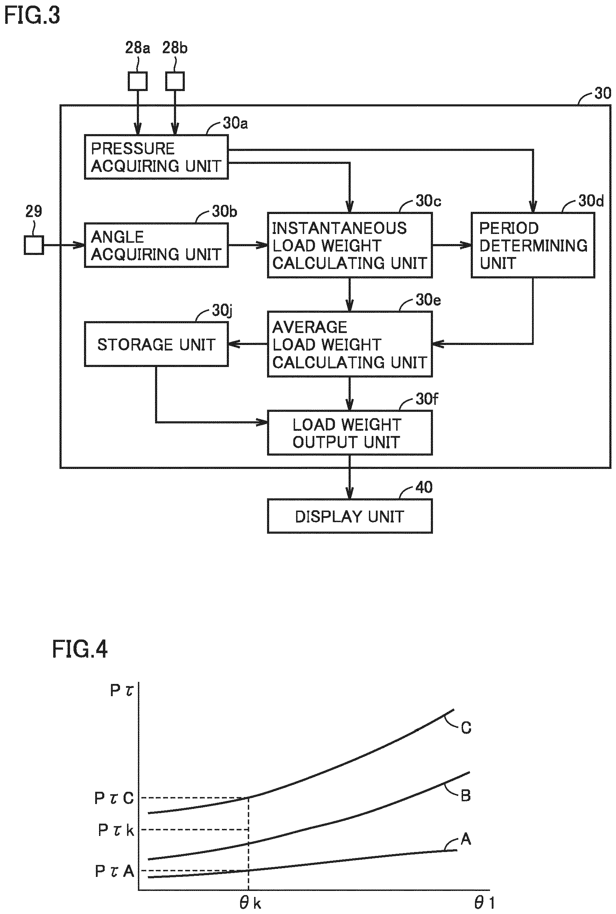

Fig. 3 is a diagram showing functional blocks in first processor 30. As shown in Fig. 3, first processor 30 mainly includes a pressure acquiring unit 30a, an angle acquiring unit 30b, an instantaneous load weight calculating unit 30c, a period determining unit 30d, an average load weight calculating unit 30e, a load weight output unit 30f, and a storage unit 30j.

From pressure sensor 28a, pressure acquiring unit 30a receives an output of a detection signal indicating the head pressure of boom cylinder 16. From pressure sensor 28b, pressure acquiring unit 30a receives an output of a detection signal indicating the bottom pressure of boom cylinder 16. Pressure acquiring unit 30a outputs a signal indicating the acquired head pressure and bottom pressure of boom cylinder 16 to period determining unit 30d. Further, pressure acquiring unit 30a calculates a pressure difference between the head pressure and the bottom pressure (the boom pressure) of boom cylinder 16. Pressure acquiring unit 30a outputs a signal of the calculated boom pressure to instantaneous load weight calculating unit 30c.

From first angle detector 29, angle acquiring unit 30b receives an output of a detection signal indicating boom angle θ1. Angle acquiring unit 30b outputs a signal indicating the acquired boom angle θ1 to instantaneous load weight calculating unit 30c.

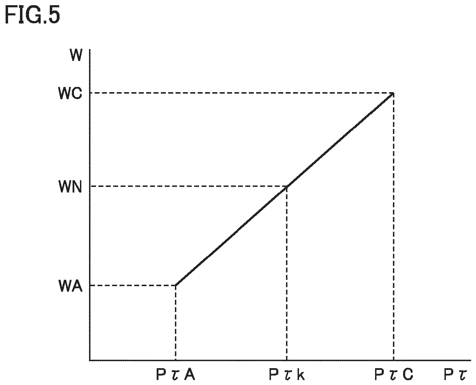

Instantaneous load weight calculating unit 30c calculates the instantaneous load weight in bucket 6 based on the signal indicating boom angle θ1 output from angle acquiring unit 30b and the signal indicating the boom pressure output from pressure acquiring unit 30a. The method of calculating the instantaneous load weight in instantaneous load weight calculating unit 30c will be described later in detail with reference to Figs. 4 and 5. The signal indicating the instantaneous load weight in bucket 6 calculated in instantaneous load weight calculating unit 30c is output to period determining unit 30d, and also output to average load weight calculating unit 30e.

Period determining unit 30d identifies fluctuations, with respect to time, in the instantaneous load weight calculated in instantaneous load weight calculating unit 30c or the boom pressure calculated in pressure acquiring unit 30a. Based on the identified fluctuations, period determining unit 30d determines the period of the fluctuations with respect to time.

For example, period determining unit 30d plots the boom pressure calculated at each time point on a graph in which the horizontal axis represents time and the vertical axis represents a boom pressure. Based on the transition of the boom pressure with respect to time, period determining unit 30d determines a period in which the boom pressure fluctuates with respect to time. For example, in the case where the boom pressure shows a waveform with damped oscillation, the time period from one local maximum value to the next local maximum value of the waveform may be defined as a period in which the boom pressure fluctuates.

Period determining unit 30d outputs the period determined in this way to average load weight calculating unit 30e.

Average load weight calculating unit 30e averages the instantaneous load weights at a plurality of time points within the period determined in period determining unit 30d to calculate an average load weight. Average load weight calculating unit 30e outputs the calculated average load weight to storage unit 30j and load weight output unit 30f.

Storage unit 30j stores the average load weight output from average load weight calculating unit 30e. Load weight output unit 30f outputs the average load weight output from average load weight calculating unit 30e to display unit 40. Display unit 40 causes a screen or the like to show the average load weight.

### <Method of Calculating Instantaneous Load Weight>

The following describes an example of a method of calculating an instantaneous load weight.

Fig. 4 is a graph showing an example of the relation between boom angle θ1 and a boom pressure Pτ for each instantaneous load weight. In the graph in Fig. 4, the horizontal axis represents boom angle θ1 while the vertical axis represents boom pressure Pτ. In Fig. 4, a curve A shows the case where bucket 6 is empty, a curve B shows the case where bucket 6 is half full, and a curve C shows the case where bucket 6 is full. Based on the graph showing the relation between boom angle θ1 and boom pressure Pτ with respect to two or more instantaneous load weights measured in advance, a graph showing the relation between the instantaneous load weight and boom pressure Pτ for each boom angle θ1 can be obtained as shown in Fig. 4.

When boom angle θ1 and boom pressure Pτ at a certain time point are obtained, the instantaneous load weight at that time point can be calculated. For example, assuming that boom angle θ1 = θk and boom pressure Pτ = Pτk at a certain time point mk as shown in Fig. 4, an instantaneous load weight WN at that time point mk can be calculated from Fig. 5. Fig. 5 is a graph showing the relation between boom pressure Pτ and a load weight W at boom angle θ1 = θk. In the graph in Fig. 5, the horizontal axis represents boom pressure Pτ while the vertical axis represents load weight W.

As shown in Fig. 4, PτA represents boom pressure occurring when bucket 6 is empty at boom angle θ1 = θk. PτC represents boom pressure occurring when bucket 6 is full at boom angle θ1 = θk. WA shown in Fig. 5 represents a load weight occurring when bucket 6 is empty at boom angle θ1 = θk. Further, WC represents a load weight occurring when bucket 6 is full at boom angle θ1 = θk.

When Pτk is located between PτA and PτC as shown in Fig. 5, instantaneous load weight WN at time point mk can be determined by performing linear interpolation. Alternatively, instantaneous load weight WN can also be obtained based on the numerical table that stores the above-described relation in advance.

The method of calculating the instantaneous load weight in bucket 6 is not limited to the examples shown in Figs. 4 and 5. In addition to or in place of the boom pressure and boom angle θ1, the pressure difference between the head pressure and the bottom pressure of bucket cylinder 19, the bucket angle, the dimensions of work implement 3, and the like can be taken into consideration as parameters for calculating the instantaneous load weight in bucket 6. By calculating the instantaneous load weight in bucket 6 in consideration of these parameters, the load weight can be more accurately calculated.

### <Excavation Operation>

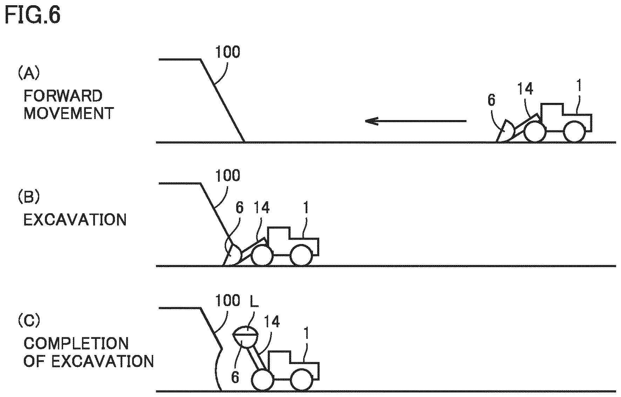

Wheel loader 1 of the embodiment performs: an excavation operation for scooping an excavation target 100 such as soil onto bucket 6; and a loading operation for loading a load L (excavation target 100) in bucket 6 onto a transportation machine such as a truck bed (an object onto which a load is loaded) of a dump truck. Wheel loader 1 repeatedly performs the excavation operation and the loading operation to excavate excavation target 100 and loads excavation target 100 onto a transportation machine such as a dump truck. Fig. 6 is a schematic diagram showing an example of the excavation operation of wheel loader 1 according to the embodiment.

As shown in Fig. 6(A), wheel loader 1 moves forward toward excavation target 100. In this forward movement step, the operator operates boom cylinder 16 and bucket cylinder 19 to cause work implement 3 to take an excavation attitude such that the tip of boom 14 is located at a low position and the bottom surface of bucket 6 faces horizontally. In this state, the operator causes wheel loader 1 to move forward toward excavation target 100.

As shown in Fig. 6(B), the operator causes wheel loader 1 to move forward until a cutting edge 6a (Fig. 1) of bucket 6 bites into excavation target 100. Then, the operator operates boom cylinder 16 to raise bucket 6, and operates bucket cylinder 19 to tilt back bucket 6. As a result of this excavation step, excavation target 100 is scooped into bucket 6. This leads to the state where bucket 6 having completed scooping is raised to the level equal to or higher than a prescribed height as shown in Fig. 6(C), for example, the state where bucket 6 is completely raised, and then, the excavation completes.

It can be determined whether the current work step of wheel loader 1 is an excavation step and work implement 3 is performing an excavation work or the current work step is not an excavation step and the work implement is not performing an excavation work, for example, by using the combination of the determination conditions about: the operation by an operator to move wheel loader 1 forward and rearward; the operation by an operator performed on work implement 3; and the current hydraulic pressure in the cylinder of work implement 3.

### <Flow of Weighing Load L in Bucket 6>

Wheel loader 1 in the present embodiment measures the weight of load L mounted in bucket 6 in the above-mentioned excavation operation, and outputs the measured weight of load L (displays the measured weight on display unit 40). For example, load L in bucket 6 may be weighed during traveling of wheel loader 1 after completion of excavation. For example, load L in bucket 6 may be weighed while boom 14 is being raised. Also, load L in bucket 6 may be weighed in the state where boom 14 is raised while wheel loader 1 stops traveling.

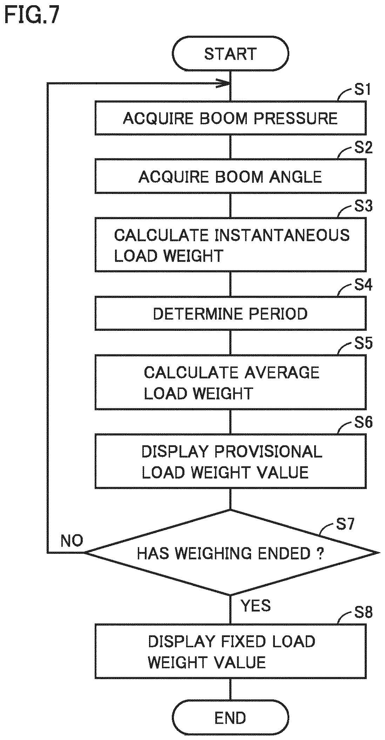

Fig. 7 is a flowchart illustrating a weighing method of weighing a load in bucket 6 according to an embodiment.

As shown in Fig. 7, boom pressure Pτ is first acquired (step S1). From pressure sensor 28a, pressure acquiring unit 30a receives an output of a detection signal indicating the head pressure of boom cylinder 16. From pressure sensor 28b, pressure acquiring unit 30a receives an output of a detection signal indicating the bottom pressure of boom cylinder 16. Pressure acquiring unit 30a calculates a pressure difference between the head pressure and the bottom pressure (boom pressure Pτ) of boom cylinder 16. Pressure acquiring unit 30a outputs a signal of the calculated boom pressure Pτ to instantaneous load weight calculating unit 30c.

Then, boom angle θ1 is acquired (step S2). From first angle detector 29, angle acquiring unit 30b receives an output of a detection signal indicating boom angle θ1. Angle acquiring unit 30b outputs a signal indicating the acquired boom angle θ1 to instantaneous load weight calculating unit 30c.

Then, the instantaneous load weight is calculated (step S3). Referring to Fig. 4, instantaneous load weight calculating unit 30c calculates boom pressure Pτ at boom angle θ1 output from angle acquiring unit 30b in each of the cases where bucket 6 is empty, bucket 6 is full, and bucket 6 is half full. Referring to Fig. 5, by appropriate linear interpolation of: load weight WA occurring when bucket 6 is empty; load weight WC occurring when bucket 6 is full; and the instantaneous load weight occurring when bucket 6 is half full, instantaneous load weight calculating unit 30c calculates instantaneous load weight W in bucket 6 that corresponds to boom pressure Pτ output from pressure acquiring unit 30a.

Then, a period in which the parameter related to instantaneous load weight W fluctuates with respect to time is determined (step S4). The parameter related to instantaneous load weight W in the embodiment refers to instantaneous load weight W or boom pressure Pτ.

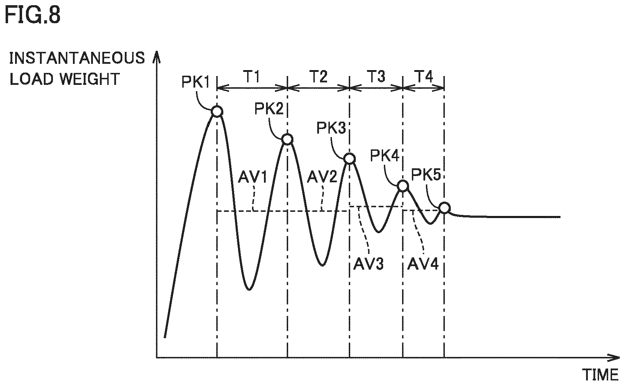

Fig. 8 is a graph showing fluctuations in instantaneous load weight with respect to time. In the graph in Fig. 8, the horizontal axis represents time while the vertical axis represents instantaneous load weight W. Period determining unit 30d plots instantaneous load weights W calculated at respective time points to produce a graph shown in Fig. 8.

As shown in Fig. 8, instantaneous load weight W periodically fluctuates with respect to time. Instantaneous load weight W fluctuates so as to oscillate in a constant period. Period determining unit 30d determines a time period T1 from a first peak point PK1 to a second peak point PK2 as a period in which instantaneous load weight W fluctuates with respect to time. At first peak point PK1, instantaneous load weight W has a local maximum, and at second peak point PK2, instantaneous load weight W has a next local maximum.

Then, an average load weight is calculated (step S5). Average load weight calculating unit 30e averages instantaneous load weights W at a plurality of time points within the period determined in previous step S4 to calculate an average load weight (an average load weight AV1 shown in Fig. 8). Average load weight calculating unit 30e may average instantaneous load weights W calculated within time period T1 from first peak point PK1 to second peak point PK2 shown in Fig. 8 to thereby calculate an average load weight.

In the process of step S4, instantaneous load weights W calculated at respective time points may be plotted on a graph with the horizontal axis representing time and the vertical axis representing boom pressure Pτ, to thereby determine the period in which instantaneous load weight W fluctuates with respect to time. In this case, in the process of step S5, boom pressures Pτ calculated within the determined period may be averaged to thereby calculate an average load weight. Alternatively, the value of the load weight in bucket 6 that corresponds to the average value of boom pressures Pτ calculated within time period T1 from first peak point PK1 to second peak point PK2 shown in Fig. 8 may be calculated as an average load weight by linear interpolation using the graph shown in Fig. 5.

Then, a provisional load weight value is displayed (step S6). Average load weight calculating unit 30e outputs the average load weight calculated in step S5 to load weight output unit 30f as a provisional load weight value. Load weight output unit 30f outputs the provisional load weight value output from average load weight calculating unit 30e to display unit 40. Display unit 40 causes a screen or the like to show the provisional load weight value.

Then, it is determined whether weighing has ended or not (step S7). In addition to first peak point PK1 and second peak point PK2 as described above, Fig. 8 shows a third peak point PK3, a fourth peak point PK4, and a fifth peak point PK5. When the time point at which fifth peak point PK5 appears has already passed at the point of time of determination in step S7, then, it is determined that the average load weights for four periods corresponding to the respective time periods across the five peak points have already been calculated, and the weighing has ended based on such calculation of these average load weights for four periods.

Even when the time point at which fifth peak point PK5 appears has not yet passed at the point of time of determination in step S7, but when the fluctuations converge and no peak point appears, then, it is determined to end the weighing. Further, also when the operation of wheel loader 1 is no longer suitable for weighing, for example, when boom angle θ1 falls out of the range suitable for weighing, or when boom 14 stops rising, then, it is determined to end the weighing.

It is preferable that weighing of load L in bucket 6 can be completed in a short time period since the productivity of the excavating and loading operations by wheel loader 1 can be enhanced. When it is determined that a sufficiently accurate average load weight could be acquired without having to calculate average load weights for four periods, it may be determined to terminate the weighing based on the determination in step S7. For example, when the average load weight in the first period and the average load weight in the second period are equal to each other or are not strictly equal to each other but the difference therebetween is sufficiently small, then, it may be determined that a sufficiently accurate average load weight could be acquired by calculation of the average load weights for two periods, and thus, weighing may be terminated. Alternatively, for example, the weight of load L may be fixed by the average load weight only in one period, and then, weighing may be terminated.

When it is determined in step S7 that weighing has not yet ended (NO in step S7), the process in steps S1 to S6 is repeated.

In the process of the second step S4, a time period T2 from second peak point PK2 to third peak point PK3 is determined as the second period. In the process of the second step S5, the average load weight within time period T2 (an average load weight AV2 shown in Fig. 8) is calculated, for example, by a process of averaging instantaneous load weights W calculated within time period T2 or a process of calculating a load weight corresponding to the average value of boom pressures Pτ calculated within time period T2. Further, average load weight AV1 within time period T1 and average load weight AV2 within time period T2 are averaged to obtain a provisional load weight value at this point of time.

In the process of the third step S4, a time period T3 from third peak point PK3 to fourth peak point PK4 is determined as the third period. In the process of the third step S5, the average load weight within time period T3 (an average load weight AV3 shown in Fig. 8) is calculated, for example, by a process of averaging instantaneous load weights W calculated within time period T3 or a process of calculating a load weight corresponding to the average value of boom pressures Pτ calculated within time period T3. Further, average load weight AV1 within time period T1, average load weight AV2 within time period T2, and average load weight AV3 within time period T3 are averaged to obtain a provisional load weight value at this point of time.

In the process of the fourth step S4, a time period T4 from fourth peak point PK4 to fifth peak point PK5 is determined as the fourth period. In the process of the fourth step S5, the average load weight within time period T4 (an average load weight AV4 shown in Fig. 8) is calculated, for example, by a process of averaging instantaneous load weights W calculated within time period T4 or a process of calculating a load weight corresponding to the average value of boom pressures Pτ calculated within time period T4. Further, average load weight AV1 within time period T1, average load weight AV2 within time period T2, average load weight AV3 within time period T3, and average load weight AV4 within time period T4 are averaged to obtain a provisional load weight value at this point of time.

When it is determined in step S7 that weighing has ended, the process proceeds to step S8, and a fixed load weight value is displayed. Load weight output unit 30f outputs the provisional load weight value, which is obtained at the point of time when the weighing is determined as having ended, to display unit 40 as a fixed load weight value. Display unit 40 causes a screen or the like to show the fixed load weight value.

Display unit 40 can display the provisional load weight value and the fixed load weight value in different display manners. For example, display unit 40 may display the provisional load weight value and the fixed load weight value in different colors. For example, display unit 40 may display the provisional load weight value in a blinking manner and may display the fixed load weight value in a continuous manner.

### <Functions and Effects>

The following summarizes characteristic configurations, functions and effects about the work machine according to the above-described embodiment. Note that the constituent elements in the embodiment are denoted by reference characters, which are however provided merely by way of example.

As shown in Fig. 2, wheel loader 1 includes first processor 30 (a controller). As shown in Fig. 3, first processor 30 includes instantaneous load weight calculating unit 30c, period determining unit 30d, and average load weight calculating unit 30e. As shown in Fig. 7, instantaneous load weight calculating unit 30c calculates an instantaneous load weight in bucket 6. Period determining unit 30d determines the period in which the parameter related to the instantaneous load weight fluctuates with respect to time. Average load weight calculating unit 30e averages the instantaneous load weights at a plurality of time points within the period to calculate an average load weight.

The time period during which the instantaneous load weights in bucket 6 are averaged to calculate an average load weight is set to correspond to the period in which the parameter fluctuates with respect to time, to thereby reduce the variation in average load weight calculated in each time period. This eliminates the need to take a long time period of averaging for eliminating the variation in average load weight, so that the load in bucket 6 can be accurately weighed in a short time period of process.

As shown in Fig. 8, period determining unit 30d determines the time period from one peak to the next peak of the parameter related to the instantaneous load weight as a period of fluctuations. Average load weight calculating unit 30e averages the instantaneous load weights in the time period from one peak to the next peak of the parameter to calculate an average load weight. Thereby, the period in which the parameter related to the instantaneous load weight fluctuates with respect to time can be readily determined.

As shown in Figs. 7 and 8, period determining unit 30d determines a plurality of periods in which the parameter related to the instantaneous load weight fluctuates with respect to time. Average load weight calculating unit 30e averages the instantaneous load weights at a plurality of time points in each of the periods to calculate a plurality of average load weights, and further averages the plurality of average load weights calculated in each of the periods. Thus, the accuracy of the average load weight can be improved, so that the load in bucket 6 can be more accurately weighed.

As shown in Figs. 2 and 3, pressure sensors 28a and 28b each sense the pressure of the hydraulic oil in an oil chamber of boom cylinder 16. As shown in Fig. 8, period determining unit 30d uses the pressure sensed by each of pressure sensors 28a and 28b as a parameter fluctuating with respect to time and related to the instantaneous load weight in bucket 6. Thereby, period determining unit 30d can accurately determine the period in which the hydraulic pressure in the oil chamber of boom cylinder 16 fluctuates with respect to time.

The parameter fluctuating with respect to time and related to the instantaneous load weight in bucket 6 is not limited to the above-mentioned pressure. The instantaneous load weight calculated based on the cylinder pressure sensed by each of pressure sensors 28a and 28b and boom angle θ1 detected by first angle detector 29 may be used as a parameter. The angular velocity of boom 14 may be used as a parameter. The angular velocity of boom 14 can be calculated by differentiating boom angle θ1 detected by first angle detector 29 with respect to time. Alternatively, an angular velocity sensor typified by an inertial measurement unit (IMU) may be attached to boom 14 to thereby directly detect the angular velocity of boom 14 with this angular velocity sensor.

Boom 14 rises while wheel loader 1 is traveling or stops after completion of excavation, as shown in Fig. 6. The instantaneous load weight in bucket 6 may be calculated while boom 14 is rising. By calculating the instantaneous load weight during a time period in which a change in instantaneous load weight in bucket 6 over time is relatively small, the instantaneous load weight can be more accurately calculated.

After completion of excavation shown in Fig. 6, wheel loader 1 with load L mounted on bucket 6 travels toward a transportation machine such as a dump truck. The instantaneous load weight in bucket 6 may be calculated while wheel loader 1 is traveling. By calculating the instantaneous load weight during a time period in which a change in instantaneous load weight in bucket 6 over time is relatively small, the instantaneous load weight can be more accurately calculated.

By applying the above-mentioned weighing method to wheel loader 1 that includes vehicular body frame 2 and running wheels (front wheels 4a and rear wheels 4b) attached to vehicular body frame 2 and also includes bucket 6 disposed forward of vehicular body frame 2, load L in bucket 6 of wheel loader 1 can be accurately weighed.

In the above embodiment, an example has been described in which the time period from one local maximum value to a next local maximum value of the parameter fluctuating with respect to time is determined as a period of fluctuations. The period in which the parameter fluctuates may be determined by other methods. For example, the time period from a local maximum value to a local minimum value of the parameter fluctuating with respect to time or the time period from a local minimum value to a local maximum value of this parameter may be determined, and then, the time length that is twice as long as the determined time period may be determined as a period of fluctuations.

The extreme value (peak) of fluctuations may not necessarily have to be used for determining the period in which the parameter fluctuates. For example, the time period that may be determined as the period of fluctuations may extend from the point of time when the instantaneous load weight fluctuating with respect to time becomes larger than the load weight value set as a provisional load weight value, through the point of time when the instantaneous load weight becomes smaller than the provisional load weight value, to the point of time when the instantaneous load weight subsequently becomes larger than the provisional load weight value.

In the above embodiment, the instantaneous load weights at a plurality of time points within the period in which the parameter fluctuates are averaged to calculate an average load weight. The plurality of instantaneous load weights averaged for calculating an average load weight may be calculated at a specific time point. For example, assuming that measurement points are set at a time point at which the fluctuating parameter becomes a local maximum and the time point at which the fluctuating parameter subsequently becomes a local minimum, the instantaneous load weights calculated at these two measurement points may be averaged to calculate an average load weight. The plurality of instantaneous load weights may be calculated continuously in time at relatively short time intervals between calculations, or may be calculated discretely in time at relatively long time intervals between calculations.

In the above embodiment, an example has been described in which wheel loader 1 includes first processor 30, and first processor 30 mounted in wheel loader 1 performs control to weigh the load in bucket 6. The controller that performs control to weigh the load in bucket 6 does not necessarily have to be mounted on wheel loader 1.

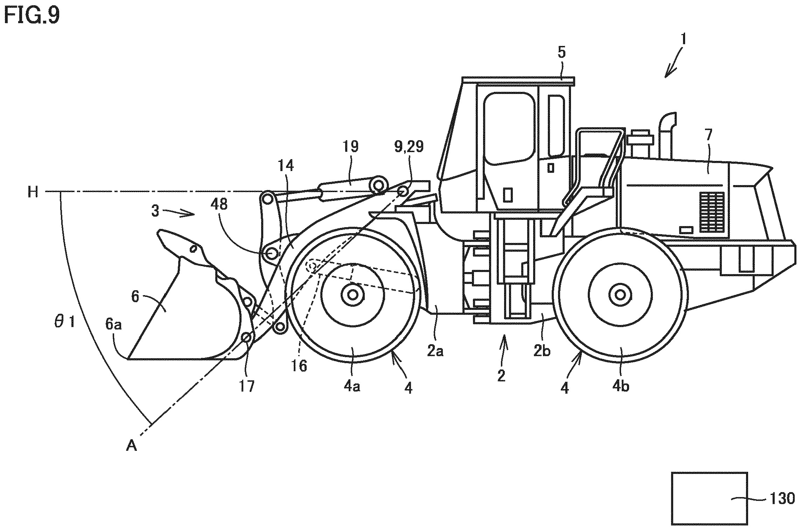

Fig. 9 is a schematic diagram of a system including wheel loader 1. An external controller 130 provided separately from first processor 30 mounted on wheel loader 1 may constitute a system for performing control to weigh the load in bucket 6. Controller 130 may be disposed at a work site of wheel loader 1 or at a remote location away from the work site of wheel loader 1.

In the above embodiment, an example has been described in which wheel loader 1 includes cab 5 and is a manned vehicle in which an operator is seated inside cab 5. Wheel loader 1 may be an unmanned vehicle. Wheel loader 1 may not include a cab in which an operator is seated to operate wheel loader 1. Wheel loader 1 may not have a steering function executed by an operator who is aboard wheel loader 1.
Wheel loader 1 may be a work machine exclusively for remote control. Wheel loader 1 may be controlled by a wireless signal from a remote steering device.

### REFERENCE SIGNS LIST

1 wheel loader, 2 vehicular body frame, 2a front frame, 2b rear frame, 3 work implement, 4 traveling unit, 4a front wheel, 4b rear wheel, 6 bucket, 14 boom, 16 boom cylinder, 19 bucket cylinder, 20 engine, 24 cylinder driving unit, 25 work implement pump, 26 control valve, 28a, 28b first hydraulic pressure detector, 29 first angle detector, 30 first processor, 30a pressure acquiring unit, 30b angle acquiring unit, 30c instantaneous load weight calculating unit, 30d period determining unit, 30e average load weight calculating unit, 30f load weight output unit, 30j storage unit, 40 display unit, 48 second angle detector, 100 excavation target, 200 dump truck, L load, P boom pressure, PK1 to PK5 peak point.

## Claims

1. A work machine comprising:
a bucket (6); and
a controller (30);
**characterized in that**
the controller (30) determines a period in which a parameter related to a load weight in the bucket (6) fluctuates with respect to time, and averages a plurality of the load weights at a plurality of time points within the period to calculate an average load weight; and
the controller (30) averages the load weights in a time period from a peak of the parameter to a next peak of the parameter.

2. The work machine according to claim 1, wherein the controller (30) calculates an instantaneous load weight in the bucket (6) and determines the period of a parameter related to the instantaneous load weight.

3. The work machine according to claim 1 or 2, wherein the controller (30) determines a plurality of the periods, and further averages a plurality of the average load weights calculated in the respective periods.

4. The work machine according to any one of claims 1 to 3, further comprising:
a boom(14) that raises and lowers the bucket (6);
a boom cylinder (16) that drives the boom (14); and
a cylinder pressure sensing unit (28a, 28b, 30a) that senses cylinder pressure of the boom cylinder (16), wherein
the controller (30) uses the cylinder pressure sensed by the cylinder pressure sensing unit (28a, 28b, 30a) as the parameter.

5. The work machine according to any one of claims 1 to 3, further comprising a boom (14) that raises and lowers the bucket (6), wherein
the controller (30) uses an angular velocity of the boom (14) as the parameter.

6. The work machine according to any one of claims 1 to 5, further comprising a boom (14) that raises and lowers the bucket (6), wherein
the controller (30) calculates the load weight while the boom (14) rises.

7. The work machine according to any one of claims 1 to 6, wherein
the work machine is a wheeled vehicle (1), and
the controller (30) calculates the load weight while the wheeled vehicle (1) travels.

8. The work machine according to any one of claims 1 to 7, further comprising:
a vehicular body frame (2); and
a running wheel (4a. 4b) attached to the vehicular body frame (2), wherein
the bucket (6) is disposed forward of the vehicular body frame (2).

9. A weighing method for a work machine (1) including a bucket (6), the weighing method being a method of weighing a load in the bucket (6), the weighing method being **characterized by**
comprising the steps of:
determining (S4) a period in which a parameter related to a load weight in the bucket (6) fluctuates with respect to time; and
averaging (S5) a plurality of the load weights at a plurality of time points within the period to calculate an average load weight, wherein the time period is a time period from a peak of the parameter to a next peak of the parameter.

10. A system including a work machine (1), the system comprising:
the work machine (1) including a bucket (6); and
a controller (30);
**characterized in that**
the controller (30) determines a period in which a parameter related to a load weight in the
bucket (6) fluctuates with respect to time, and averages a plurality of the bad weights at a plurality of time points within the period to calculate an average load weight; and
the controller (30) averages the load weights in a time period from a peak of the parameter to a next peak of the parameter.

## Patentansprüche

1. Arbeitsmaschine, umfassend:
eine Schaufel (6); und
ein Steuergerät (30);
**dadurch gekennzeichnet, dass**
das Steuergerät (30) eine Zeitspanne bestimmt, in der ein Parameter, der sich auf ein Lastgewicht in der Schaufel (6) bezieht, in Bezug auf die Zeit schwankt, und eine Vielzahl der Lastgewichte zu einer Vielzahl von Zeitpunkten innerhalb der Zeitspanne mittelt, um ein durchschnittliches Lastgewicht zu berechnen; und
das Steuergerät (30) die Lastgewichte in einer Zeitspanne von einem Spitzenwert des Parameters bis zu einem nächsten Spitzenwert des Parameters mittelt.

2. Arbeitsmaschine nach Anspruch 1, bei der das Steuergerät (30) ein momentanes Lastgewicht in der Schaufel (6) berechnet und die Zeitspanne eines mit dem momentanen Lastgewicht verbundenen Parameters bestimmt.

3. Arbeitsmaschine nach Anspruch 1 oder 2, bei der das Steuergerät (30) eine Vielzahl von Zeitspannen bestimmt und zudem eine Vielzahl der in den jeweiligen Zeitspannen berechneten durchschnittlichen Lastgewichte mittelt.

4. Arbeitsmaschine nach einem der Ansprüche 1 bis 3, weiterhin umfassend:
einen Ausleger (14), der die Schaufel (6) anhebt und absenkt;
einen Auslegerzylinder (16), der den Ausleger (14) antreibt; und
eine Zylinderdruckerfassungseinheit (28a, 28b, 30a), die den Zylinderdruck des Auslegerzylinders (16) erfasst, wobei
das Steuergerät (30) den von der Zylinderdruckerfassungseinheit (28a, 28b, 30a) erfassten Zylinderdruck als Parameter verwendet.

5. Arbeitsmaschine nach einem der Ansprüche 1 bis 3, weiterhin umfassend einen Ausleger (14), der die Schaufel (6) anhebt und absenkt, wobei
das Steuergerät (30) eine Winkelgeschwindigkeit des Auslegers (14) als Parameter verwendet.

6. Arbeitsmaschine nach einem der Ansprüche 1 bis 5, weiterhin umfassend einen Ausleger (14), der die Schaufel (6) anhebt und absenkt, wobei
das Steuergerät (30) das Lastgewicht berechnet, während sich der Ausleger (14) hebt.

7. Arbeitsmaschine nach einem der Ansprüche 1 bis 6, wobei
die Arbeitsmaschine ein Radfahrzeug (1) ist, und
das Steuergerät (30) das Lastgewicht während der Fahrt des Radfahrzeugs (1) berechnet.

8. Arbeitsmaschine nach einem der Ansprüche 1 bis 7, weiterhin umfassend:
einen Fahrzeugkarosserierahmen (2); und
ein Laufrad (4a, 4b), das an dem Fahrzeugkarosserierahmen (2) angebracht ist, wobei
die Schaufel (6) vor dem Fahrzeugkarosserierahmen (2) angeordnet ist.

9. Wiegeverfahren für eine Arbeitsmaschine (1), umfassend eine Schaufel (6), wobei das Wiegeverfahren ein Verfahren zum Wiegen einer Last in der Schaufel (6) ist und das Wiegeverfahren **dadurch gekennzeichnet ist, dass** es die folgenden Schritte umfasst:
Bestimmen (S4) einer Zeitspanne, in der ein Parameter, der sich auf ein Lastgewicht in der Schaufel (6) bezieht, in Bezug auf die Zeit schwankt; und
Mitteln (S5) einer Vielzahl von Lastgewichten zu einer Vielzahl von Zeitpunkten innerhalb der Zeitspanne, um ein durchschnittliches Lastgewicht zu berechnen, wobei die Zeitperiode eine Zeitperiode von einer Spitze des Parameters bis zu einer nächsten Spitze des Parameters ist.

10. System, umfassend eine Arbeitsmaschine (1), wobei das System umfasst:
die Arbeitsmaschine (1), die eine Schaufel (6) umfasst; und
ein Steuergerät (30);
**dadurch gekennzeichnet, dass**
das Steuergerät (30) eine Zeitspanne bestimmt, in der ein Parameter, der sich auf ein Lastgewicht in der Schaufel (6) bezieht, in Bezug auf die Zeit schwankt, und eine Vielzahl der Lastgewichte zu einer Vielzahl von Zeitpunkten innerhalb der Zeitspanne mittelt, um ein durchschnittliches Lastgewicht zu berechnen; und
das Steuergerät (30) die Lastgewichte in einer Zeitspanne von einem Spitzenwert des Parameters bis zu einem nächsten Spitzenwert des Parameters mittelt.

## Revendications

1. Machine de travail comprenant :
un godet (6) ; et
un contrôleur (30) ;
**caractérisée en ce que**
le contrôleur (30) détermine une période sur laquelle un paramètre associé à un poids de charge dans le godet (6) fluctue dans le temps, et moyenne une pluralité des poids de charge à une pluralité de points temporels au sein de la période pour calculer un poids de charge moyen ; et
le contrôleur (30) moyenne les poids de charge sur une période temporelle d'un pic du paramètre au pic suivant du paramètre.

2. La machine de travail selon la revendication 1, dans laquelle le contrôleur (30) calcule un poids de charge instantané dans le godet (6) et détermine la période d'un paramètre associé au poids de charge instantané.

3. La machine de travail selon la revendication 1 ou 2, dans laquelle le contrôleur (30) détermine une pluralité des périodes, et moyenne en outre une pluralité des poids de charge moyens calculés sur les périodes respectives.

4. La machine de travail selon l'une quelconque des revendications 1 à 3, comprenant en outre :
une flèche (14) qui élève et abaisse le godet (6) ;
un vérin de flèche (16) qui entraîne la flèche (14) ; et
une unité de détection de pression de vérin (28a, 28b, 30a) qui détecte une pression de vérin du cylindre de flèche (16), dans laquelle
le contrôleur (30) utilise la pression de vérin détectée par l'unité de détection de pression de vérin (28a, 28b, 30a) en tant que paramètre.

5. La machine de travail selon l'une quelconque des revendications 1 à 3, comprenant en outre une flèche (14) qui élève et abaisse le godet (6), dans laquelle
le contrôleur (30) utilise une vélocité angulaire de la flèche (14) en tant que paramètre.

6. La machine de travail selon l'une quelconque des revendications 1 à 5, comprenant en outre une flèche (14) qui élève et abaisse le godet (6), dans laquelle
le contrôleur (30) calcule le poids de charge tandis que la flèche (14) s'élève.

7. La machine de travail selon l'une quelconque des revendications 1 à 6, dans laquelle
la machine de travail est un véhicule sur roues (1), et le contrôleur (30) calcule le poids de charge tandis que le véhicule sur roues (1) se déplace.

8. La machine de travail selon l'une quelconque des revendications 1 à 7, comprenant en outre :
un châssis véhiculaire (2) ; et
une roue de roulement (4a, 4b) fixée au châssis véhiculaire (2), dans laquelle
le godet (6) est disposé en avant du châssis véhiculaire (2).

9. Procédé de pesée pour une machine de travail (1) incluant un godet (6), le procédé de pesée constituant un procédé de pesée d'une charge dans le godet (6), le procédé de pesée étant
**caractérisé par**
ce qu'il comprend en outre les étapes de :
une détermination (S4) d'une période sur laquelle un paramètre associé à un poids de charge dans le godet (6) fluctue dans le temps ; et
un moyennage (S5) d'une pluralité des poids de charge sur une pluralité de points temporels au sein de la période pour calculer un poids de charge moyen, dans lequel la période temporelle est une période temporelle d'un pic du paramètre à un pic suivant du paramètre.

10. Système incluant une machine de travail (1), le système comprenant :
la machine de travail (1) incluant un godet (6) ; et
un contrôleur (30) ;
**caractérisé en ce que**
le contrôleur (30) détermine une période sur laquelle un paramètre associé à un poids de charge dans le godet (6) fluctue dans le temps, et moyenne une pluralité des poids de charge à une pluralité de points temporels au sein de la période pour calculer un poids de charge moyen ; et
le contrôleur (30) moyenne les poids de charge sur une période temporelle d'un pic du paramètre au pic suivant du paramètre.
